# EUROPÄISCHE PATENTSCHRIFT

(11) **EP 0 495 768 B1**
(45) Veröffentlichungstag und Bekanntmachung des Hinweises auf die Patenterteilung: **28.09.1994**
(21) Anmeldenummer: 92890008.3
(22) Anmeldetag: 15.01.1992
(51) Int. Cl.: G02C 1/08

(54) **Brillengestell**
Spectacle frame
Monture de lunettes

(30) Priorität: 17.01.1991 AT 95/91
(43) Veröffentlichungstag der Anmeldung: 22.07.1992
(73) Patentinhaber: SILHOUETTE INTERNATIONAL GESELLSCHAFT m.b.H., A-4021 Linz (AT)
(72) Erfinder: Hofmair, Herbert, A-4030 Linz (AT); Fuchs, Gerhard, A-4061 Pasching (AT)
(74) Vertreter: Hübscher, Gerhard, Dipl.-Ing.

(56) Entgegenhaltungen:
- DE-A- 1 772 401
- FR-A- 970 796
- US-A- 2 553 496
- US-A- 2 594 395
- US-A- 3 801 189
- US-A- 4 601 555

## Beschreibung

Die Erfindung bezieht sich auf ein Brillengestell mit zwei durch einen Nasensteg miteinander verbundenen, Brillengläser aufnehmenden Fassungsringen, die aus einem gemeinsamen, den Nasensteg bildenden Oberteil und je einem vom Oberteil getrennten, eine Nasenauflage aufweisenden unteren Ringteil bestehen, der mit dem Oberteil über eine formschlüssige Kupplung auswechselbar verbunden ist.

Bei herkömmlichen Brillen, die zwei geschlossene Fassungsringe für die Brillengläser aufweisen, ist die Umrißform für die Brillengläser und damit die Brillenform durch das Brillengestell unveränderbar vorgegeben. Für jede Brillenform wird daher ein gesondertes Brillengestell erforderlich, was nicht nur die Herstellung verschiedener Brillenformen aufwendig macht, sondern auch deren Lagerhaltung.

Um diese Nachteile zu vermeiden, wurde bereits vorgeschlagen (DE-OS 1 772 401, FR-PS 970 796), die unteren Teile der Fassungsringe getrennt von dem gemeinsamen, den Nasensteg bildenden Oberteil herzustellen und diese Teile auswechselbar miteinander zu verbinden, so daß beispielsweise verschieden geformte bzw. unterschiedlich gefärbte untere Ringteile mit ein und demselben Oberteil des Brillengestelles kombiniert werden können, um den Gesamteindruck der Brille zu variieren. Nachteilig bei diesen bekannten Brillengestellen ist, daß die Kupplung zwischen den unteren Ringteilen der Fassungsringe für die Brillengläser und dem gemeinsamen Oberteil durch Steckzapfen erfolgt, die in Umfangsrichtung der Fassungsringe verlaufen. Die Festigkeit dieser Steckverbindungen ist in der Praxis nicht ausreichend, um die Fassungsringe zusammenzuhalten, so daß entweder der Zusammenhalt zwischen den Teilen der Fassungsringe über angeformte Schließblöcke mit Hilfe von Schrauben zusätzlich gesichert oder eine Verbindung mit quer zur Fassungsebene verlaufenden Schließstiften gewählt wird, was jeweils zu einem vergrößerten Aufwand und einer erschwerten Handhabung bei der Montage führt.

Schließlich ist es bei einer Brille, deren Fassungsringe durch einen gemeinsamen Oberteil und einem ebenfalls gemeinsamen Unterteil gebildet werden, bekannt (US-PS 2 553 496), zwischen den beiden Teilen eine schnappverschlußartige Kupplung über eine quer zur Fassungsebene verlaufende Verhakung der beiden Teile im Bereich des Nasensteges vorzusehen. Wird diese formschlüssige Verbindung als wieder öffenbare Kupplung ausgebildet, so besteht die Gefahr, daß die beiden Gestellteile sich bei den üblichen Belastungen ungewollt voneinander trennen und die Brillengläser freigeben.

Der Erfindung liegt somit die Aufgabe zugrunde, diese Mängel zu vermeiden und ein Brillengestell der eingangs geschilderten Art mit einfachen Mitteln so auszugestalten, daß zwischen dem gemeinsamen Oberteil und den unteren Ringteilen der Fassungsringe eine einfache, wiederholt lösbare Kupplung geschaffen wird, die in der Schließstellung ohne zusätzliche Konstruktionsteile sicher verriegelt ist.

Die Erfindung löst die gestellte Aufgabe dadurch, daß die Kupplungen zwischen dem Oberteil und den unteren Ringteilen je aus einem bezüglich des Brillenglases auswärts gerichteten Kupplungshaken der Ringteile bestehen, der in je eine nach innen offene Kupplungstasche des Oberteiles eingreift.

Da zufolge dieser Kupplungausbildung die Verhakung der zu kuppelnden Teile von der Innenseite des Fassungsringes her erfolgt, wird die damit erzielte, formschlüssige Kupplung durch das anschließend in den Fassungsring eingesetzte Brillenglas verriegelt, weil das Brillenglas das Herausziehen des Kupplungshakens aus der Kupplungstasche verhindert, was ja nur bezüglich des Brillenglases radial nach innen erfolgen kann. Es wird daher eine Konstruktion erhalten, die sich hinsichtlich ihrer Form und ihrer Festigkeit durchaus mit herkömmlichen Brillen mit in sich geschlossenen einstückigen Fassungsringen vergleichen läßt. Zum Auswechseln der unteren Ringteile sind zunächst die Brillengläser aus der Fassung zu drücken, bevor die unteren Ringteile durch ein einfaches Aushaken werkzeuglos ausgewechselt werden können.

Besonders vorteilhafte Konstruktionsverhältnisse können sichergestellt werden, wenn der Oberteil des Brillengestelles biegesteif und die unteren Ringteile der Fassungsringe biegsam ausgebildet werden. Durch diese Maßnahme entfällt nämlich die Notwendigkeit, die Brillengläser an eine vorgegebene Fassung anpassen zu müssen, so daß Brillengläser unterschiedlicher Umrißform eingesetzt werden können, wenn eine entsprechende Anpassung an den Oberteil vorliegt. Die unteren, biegsamen Ringteile schmiegen sich ja von selbst an die Umrißform der jeweils eingesetzten Brillengläser an. Allerdings ist die Länge der unteren Ringteile an die entsprechende Umfangslänge der Brillengläser anzugleichen, um eine gute Glashalterung sicherzustellen. Die biegsamen unteren Ringteile der Fassungsringe erlauben aber nicht nur den Einsatz von im Bereich dieser unteren Ringteile hinsichtlich ihrer Umrißform unterschiedlich geformten Brillengläsern, sondern ermöglichen auch aufgrund ihres Werkstoffes Nasenauflagen mit einer gleichmäßigen Druckverteilung über die gesamte Anlagefläche.

Da die unteren, biegsamen Ringteile sich an die jeweilige Umrißform der Brillengläser angleichen, brauchen sie keine einer bestimmten Umrißform der Brillengläser entsprechende Krümmung aufzuweisen. Die biegsamen, unteren Ringteile können vielmehr als zumindest teilweise gerade verlaufende Fertigteile hergestellt werden, was einerseits den Aufwand für die Formen zur Herstellung der unteren Ringteile wesentlich erhabsetzt und anderseits die einfache Möglichkeit schafft, unterschiedlich lange Fertigteile herzustellen, um dem unterschiedlichen Umfangslängen der Brillengläser Rechnung zu tragen, weil wegen des geraden Verlaufes der die späteren Ringteile bildendenden Fertigteile die Herstellungsformen durch Einsatzteile ohne besonderen Aufwand verlängert oder verkürzt werden können.

In der Zeichnung ist der Erfindungsgegenstand beispielsweise dargestellt. Es zeigen
- Fig. 1: ein erfindungsgemäßes Brillengestell in einer vereinfachten Vorderansicht,
- Fig. 2: dieses Brillengestell ausschnittsweise im Bereich des Nasensteges in einem Teilschnitt in einem größeren Maßstab,
- Fig. 3: einen Schnitt nach der Linie III-III der Fig. 2,
- Fig. 4: einen Schnitt im Bereich der äußeren Kupplung zwischen dem Oberteil und dem unteren Ringteil eines Fassungsringes in einem größeren Maßstab,
- Fig. 5: einen Schnitt nach der Linie V-V der Fig. 4,
- Fig. 6: einen unteren Ringteil in Form eines geraden Fertigteiles in einer Seitenansicht und
- Fig. 7: einen Schnitt nach der Linie VII-VII der Fig. 6.

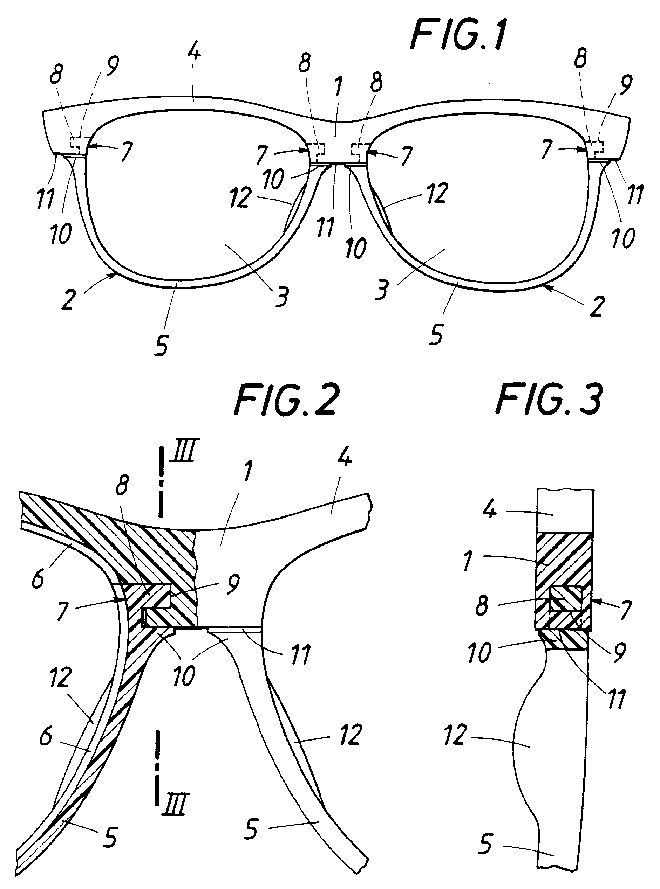

Das dargestellte Brillengestell weist in herkömmlicher Weise zwei durch einen Nasensteg 1 miteinander verbundene Fassungsringe 2 für Brillengläser 3 auf. Diese Fassungsringe sind jedoch nicht einstückig, sondern geteilt ausgebildet und bestehen aus einem gemeinsamen, den Nasensteg 1 bildenden, biegesteifen Oberteil 4 und je einem biegsamen, unteren Ringteil 5, der wie der Oberteil 4 eine Aufnahmenut 6 für die Brillengläser 3 bildet. Diese unteren Ringteile 5 sind mit dem Oberteil 4 über formschlüssige Kupplungen 7 auswechselbar verbunden, wie dies insbesondere den Fig. 2 bis 5 entnommen werden kann. Die Kupplungen 7 selbst ergeben sich durch an den beiden Enden der Ringteile 5 angeordnete Kupplungshaken 8, die auf der der Aufnahmenut 6 gegenüberliegenden Außenseite der Ringteile vorgesehen und in bezug auf die Brillengläser 3 nach außen gerichtet sind, um in nach innen offene Kupplungstaschen 9 des Oberteiles 4 einzugreifen. Zum Kuppeln der Oberteile 4 und der Ringteile 5 werden die Kupplungshaken 8 von der Fassungsinnenseite her in die Kupplungstaschen 9 eingeschoben, wobei sich die Aufnahmenuten 6 der Ringteile 5 und des Oberteiles 4 jeweils zu einer geschlossenen Ringnut für die Brillengläser 3 ergänzen. Nach dem Einsetzen der Brillengläser 3 wird die Kupplungsverbindung durch die Brillengläser 3 selbst verriegelt. Die Kupplungshaken 8 bilden aufgrund ihres Formschlusses innerhalb der Aufnahmetaschen 9 nicht nur eine zugefeste Verbindung in Umfangsrichtung, sondern verhindern auch einen seitlichen Versatz zwischen dem Oberteil 4 und den Ringteilen 5, so daß nach dem Einsetzen der Brillengläser 3 mit herkömmlichen Brillengestellen durchaus vergleichbare Konstruktionsverhältnisse vorliegen. Um einen spielfreien Ansatz der unteren Ringteile 5 an den Oberteil 4 sicherzustellen, empfiehlt es sich, die Ringteile 5 zusätzlich mit Abdeckflanschen 10 zu versehen, die die Anschlußfläche 11 des Nasensteges bzw. der Außenenden des Oberteiles 4 übergreifen.

Die Nasenauflagen 12 werden von den biegsamen Ringteilen 5 gebildet, um die Werkstoffeigenschaften dieser Ringteile 5 für ein gleichmäßiges Anlegen der Nasenauflagen 12 an den Nasenrücken des Brillenbenützers ohne örtliche Druckstellen sicherstellen zu können.

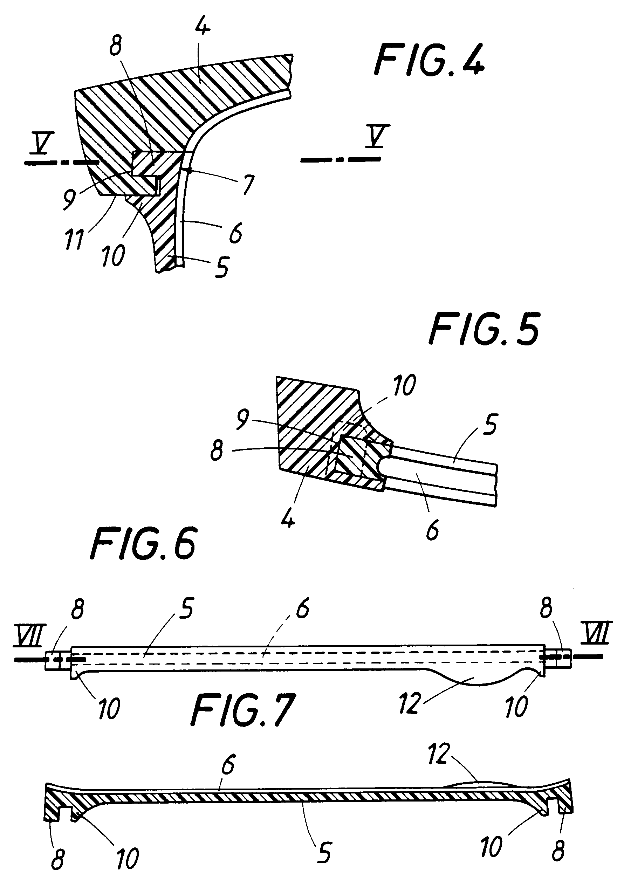

Wie den Fig. 6 und 7 entnommen werden kann, können die unteren Ringteile 5 vorzugsweise als gerade Fertigteile hergestellt werden, weil sie ja erst bei ihrem Einsatz in einem Brillengestell gebogen werden und sich an den Umriß der eingesetzten Brillengläser anschmiegen. Diese geraden Fertigteile können in einfacher Weise unterschiedlich lang hergestellt werden, weil lediglich im Mittelbereich einer Form zur Herstellung dieser Ringteile Einsätze vorgesehen werden müssen, über die die Gesamtlänge der Ringteile verkürzt oder verlängert wird. Eine nachträgliche Anpassung der Länge der unteren Ringteile 5 an die jeweilige Umfangslänge der Brillengläser ist ja nicht möglich.

## Patentansprüche

1. Brillengestell mit zwei durch einen Nasensteg (1) miteinander verbundenen, Brillengläser (3) aufnehmenden Fassungsringen (2) die aus einem gemeinsamen, den Nasensteg (1) bildenden Oberteil (4) und je einem vom Oberteil (4) getrennten, eine Nasenauflage (12) aufweisenden unteren Ringteil (5) bestehen, der mit dem Oberteil (4) über eine formschlüssige Kupplung (7) auswechselbar verbunden ist, dadurch gekennzeichnet, daß die Kupplungen (7) zwischen dem Oberteil (4) und den unteren Ringteilen (5) je aus einem bezüglich des Brillenglases (3) auswärts gerichteten Kupplungshaken (8) der Ringteile (5) bestehen, der in je eine nach innen offene Kupplungstasche (9) des Oberteiles (4) eingreift.

2. Brillengestell nach Anspruch 1, dadurch gekennzeichnet, daß in an sich bekannter Weise der Oberteil (4) biegesteif und die unteren Ringteile (5) biegsam ausgebildet sind.

3. Brillengestell nach Anspruch 2, dadurch gekennzeichnet, daß die unteren biegsamen Ringteile (5) aus zumindest teilweise geraden Fertigteilen bestehen.

## Claims

1. A spectacles frame comprising two lens mount rings (2) interconnected by a nose bridge (1) and receiving lenses (3), said rings consisting of a common upper part (4) forming the nose bridge (1) and in each case a lower ring part (5) separated from the upper part (4) and comprising a nose support (12), the lower part (5) being interchangeably connected to the upper part (4) via a positive connection (7), characterised in that the connections (7) between the upper part (4) and the lower ring parts (5) each consist of a connecting hook (8) associated with the ring parts (5) and directed outwardly with respect to the lens (3), said hook engaging in each case in an inwardly open pocket (9) in the upper part (4).

2. A spectacles frame according to claim 1, characterised in that the upper part (4) is in manner known per se inflexible and the lower ring parts (5) are flexible.

3. A spectacles frame according to claim 2, characterised in that the lower flexible ring parts (5) consist of at least partially straight finished parts.

## Revendications

1. Monture de lunettes, comportant deux anneaux (2) de monture reliés ensemble par un pont (1) et recevant des verres de lunettes, et composée d'une partie supérieure (4), constituant le pont (1), et respectivement d'une partie d'anneau inférieure (5), séparée de la partie supérieure (4) et présentant un appui de nez (12), reliée de manière amovible à la partie supérieure (4), par l'intermédiaire d'un élément d'accouolement (7) à ajustement de forme,
caractérisée en ce que les éléments (7) d'accouplement situés entre la partie supérieure (4) et les parties d'anneau inférieures (5) sont chacun composés d'un crochet (8) d'accouplement, orienté vers l'extérieur par rapport au verre de lunette (3) et appartenant aux parties d'anneau (5), s'engageant chacun dans un gousset de couplage (9), ouvert en direction de l'intérieur, de la partie supérieure (4).

2. Monture de lunettes selon la revendication 1,
caractérisée en ce que, de manière connue en soi, la partie supérieure (4) présente une rigidité en flexion et les parties d'anneau inférieures (5) présentent une flexibilité.

3. Monture de lunettes selon l'une des revendications 1 ou 2,
caractérisé en ce que les parties d'anneau inférieures (5) sont composées de pièces terminées, au moins partiellement rectilignes.
